# EUROPEAN PATENT APPLICATION

(11) **EP 4 822 608 A1**
(43) Date of publication of application: **14.10.2026**
(21) Application number: 23960743.5
(22) Date of filing: 05.12.2023
(51) Int. Cl.: G06N 10/40

(54) **QUANTUM DEVICE AND METHOD FOR CONTROLLING QUANTUM DEVICE**

(71) Applicant: FUJITSU LIMITED, Kawasaki-shi, Kanagawa 211-8588 (JP)
(72) Inventor: MIYAHARA, Shoichi, Kawasaki-shi, Kanagawa 211-8588 (JP); KAWAGUCHI, Kenichi, Kawasaki-shi, Kanagawa 211-8588 (JP); MIYATAKE, Tetsuya, Kawasaki-shi, Kanagawa 211-8588 (JP)
(74) Representative: Haseltine Lake Kempner LLP
(86) International application number: PCT/JP2023/043451
(87) International publication number: WO 2025/120728

(57) **Abstract**

A quantum device includes a plurality of quantum bit elements each including a diamond crystal layer and a color center, the diamond crystal layer having a central portion and extending portions connected to the central portion and extending in 2n directions (n is an integer of 2 or more) from the central portion, the color center being formed in the central portion, an input optical waveguide connected to each of n ends of the extending portions and configured to transmit light introduced into the color center, an output optical waveguide connected to each of n ends of the extending portions and configured to transmit a photon emitted from the color center, and a branching element connected to the output optical waveguide of a first quantum bit element of the plurality of quantum bit elements and the output optical waveguide of a second quantum bit element of the plurality of quantum bit elements.

## Description

### TECHNICAL FIELD

The present invention relates to quantum devices and a method of controlling a quantum device.

### BACKGROUND ART

A diamond spin-based quantum computer has been proposed that uses, as a quantum bit, an electron spin of a color center, which is a composite defect of an impurity atom and a vacancy in a diamond crystal (for example, Patent Literatures 1 to 4).

### CITATION LIST

### PATENT LITERATURE

Patent Literature 1: International Publication No. WO2022/070341
Patent Literature 2: International Publication No. WO2022/259484
Patent Literature 3: U.S. Patent Application Publication No. 2007/0252081
Patent Literature 4: U.S. Patent Application Publication No. 2020/0287631

### SUMMARY OF INVENTION

### TECHNICAL PROBLEM

It is desired to provide a plurality of quantum bit elements each including a diamond crystal layer in which a color center is present, and to enable formation of quantum entanglement between adjacent quantum bit elements among the plurality of quantum bit elements.

According to an aspect, an object is to enable formation of the quantum entanglement between a plurality of adjacent quantum bit elements.

### SOLUTION TO PROBLEM

According to an aspect, there is provided a quantum device including: a plurality of quantum bit elements each including a diamond crystal layer and a color center, the diamond crystal layer having a central portion and extending portions connected to the central portion and extending in 2n directions (n is an integer of 2 or more) from the central portion, the color center being formed in the central portion; an input optical waveguide connected to each of n ends of the extending portions and configured to transmit light introduced into the color center; an output optical waveguide connected to each of n ends of the extending portions and configured to transmit a photon emitted from the color center; and a branching element connected to the output optical waveguide of a first quantum bit element of the plurality of quantum bit elements and the output optical waveguide of a second quantum bit element of the plurality of quantum bit elements.

According to an aspect, there is provided a method of controlling a quantum device. The quantum device includes: a plurality of quantum bit elements each including a diamond crystal layer and a color center, the diamond crystal layer having a central portion and extending portions connected to the central portion and extending in 2n directions (n is an integer of 2 or more) from the central portion, the color center being formed in the central portion; an input optical waveguide connected to each of n ends of the extending portions and configured to transmit light introduced into the color center; an output optical waveguide connected to each of n ends of the extending portions and configured to transmit a photon emitted from the color center; and a branching element connected to the output optical waveguide of a first quantum bit element of the plurality of quantum bit elements and the output optical waveguide of a second quantum bit element of the plurality of quantum bit elements. The method of controlling a quantum device includes: introducing light into the first quantum bit element and the second quantum bit element; and causing a first photon emitted from the first quantum bit element and a second photon emitted from the second quantum bit element to form quantum entanglement in the branching element.

### ADVANTAGEOUS EFFECTS OF INVENTION

In one aspect, the quantum entanglement can be formed between a plurality of adjacent quantum bit elements.

### BRIEF DESCRIPTION OF DRAWINGS

[FIG. 1] FIG. 1 is a plan view of a quantum device according to a comparative example.
[FIG. 2] FIG. 2 is a plan view of a quantum bit element according to Embodiment 1.
[FIG. 3] FIG. 3 is a plan view of a quantum device according to Embodiment 1.
[FIG. 4] FIG. 4 is a plan view of a quantum device according to Embodiment 2.
[FIG. 5] FIG. 5 is a cross-sectional view of a portion where common optical waveguides and output optical waveguides intersect each other in Embodiment 2.
[FIG. 6] FIGs. 6(a) and 6(b) are cross-sectional views illustrating transmission of an optical pulse from the common optical waveguides to the input optical waveguides in Embodiment 2.
[FIG. 7] FIG. 7 is a plan view for explaining an example of control by a control unit in Embodiment 2.
[FIG. 8] FIG. 8 is a flowchart illustrating an example of control by the control unit according to Embodiment 2.
[FIG. 9] FIG. 9 is a plan view of a quantum bit element according to Embodiment 3.
[FIG. 10] FIG. 10 is a plan view of a quantum device according to Embodiment 3.
[FIG. 11] FIG. 11 is a plan view of a quantum device according to Embodiment 4.
[FIG. 12] FIGs. 12(a) to 12(c) are cross-sectional views of a portion where common optical waveguides and output optical waveguides intersect each other in Embodiment 4.
[FIG. 13] FIGs. 13(a) and 13(b) are cross-sectional views illustrating transmission of an optical pulse from the common optical waveguides to the input optical waveguides in Embodiment 4.
[FIG. 14] FIG. 14 is a plan view for explaining an example of control by a control unit in Embodiment 4.
[FIG. 15] FIG. 15 is a flowchart illustrating an example of control by the control unit in Embodiment 4.
[FIG. 16] FIG. 16 is a plan view of a quantum device according to Embodiment 5.
[FIG. 17] FIG. 17 is a plan view of a quantum device according to Embodiment 6.

### DESCRIPTION OF EMBODIMENTS

First, a quantum device according to a comparative example will be described in order to clarify the problem to be solved by the present invention.

### [Comparative Example]

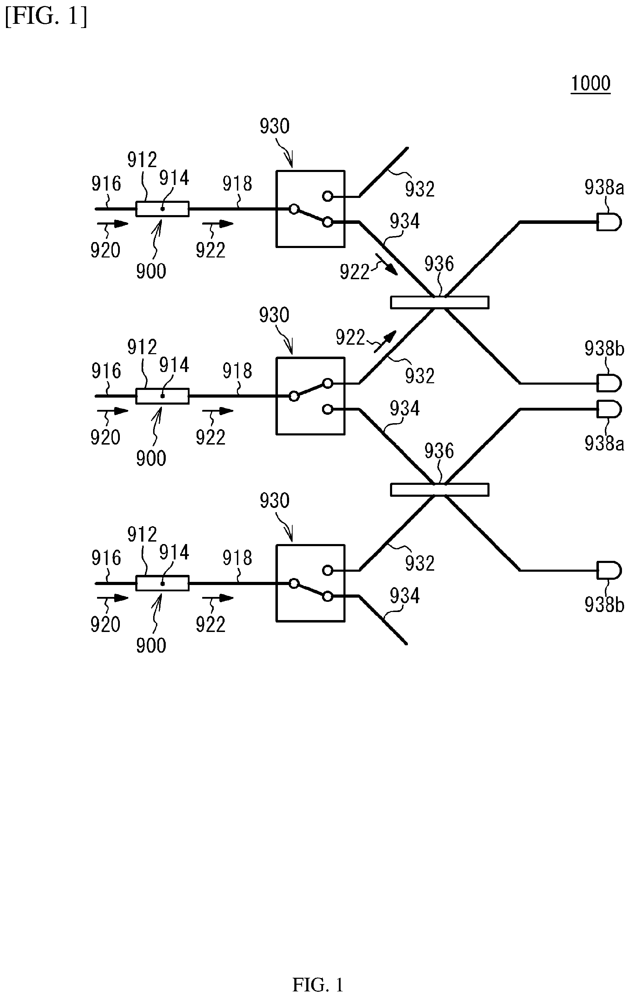

FIG. 1 is a plan view of a quantum device 1000 according to a comparative example. As illustrated in FIG. 1, in the quantum device 1000 according to the comparative example, a plurality of quantum bit elements 900 are provided side by side in one direction. The quantum bit element 900 includes a diamond crystal layer 912 including a color center 914. An input optical waveguide 916 is connected to one end of the diamond crystal layer 912, and an output optical waveguide 918 is connected to the other end of the diamond crystal layer 912. The color center 914 is, for example, a nitrogen-vacancy center (NV center) formed of nitrogen and a vacancy. The input optical waveguide 916 transmits an optical pulse 920 to be introduced to the color center 914. The output optical waveguide 918 transmits a photon pulse 922 of a single photon emitted from the color center 914 by the introduction of the optical pulse 920.

An optical switch 930 is connected to the output optical waveguide 918 of each of the plurality of quantum bit elements 900. The optical switch 930 is, for example, a MEMS (Micro Electro Mechanical Systems) switch. An optical waveguide 932 and an optical waveguide 934 are connected to the optical switch 930. The optical waveguide 932 to which one of the adjacent quantum bit elements 900 is connected via the optical switch 930 and the optical waveguide 934 to which the other of the adjacent quantum bit elements 900 is connected via the optical switch 930 are connected to a common beam splitter 936. The beam splitter 936 is connected to photodetectors 938a and 938b which are single-photon photodetectors.

The photon pulse 922 emitted from one of the adjacent quantum bit elements 900 to the optical waveguide 932 via the optical switch 930 and the photon pulse 922 emitted from the other of the adjacent quantum bit elements 900 to the optical waveguide 934 via the optical switch 930 are introduced into the common beam splitter 936 and detected by the photodetector 938a or the photodetector 938b. Accordingly, quantum entanglement can be formed between the adjacent quantum bit elements 900. By providing the optical switch 930, the quantum entanglement can be formed between the quantum bit elements 900 adjacent on both sides.

As described above, in the comparative example, the quantum entanglement can be formed by changing the combination of the quantum bit elements 900 by switching the optical switches 930. However, since the photon pulse 922 of the single photon emitted from the quantum bit element 900 is a minute signal with small energy, it may be attenuated or extinguished due to a subtle shift in the switching operation of the optical switch 930. Therefore, in the configuration in which the optical switch 930 switches the path of the photon pulse 922, the photon pulse 922 may be attenuated or extinguished, and the photon pulse 922 may not be detected by the photodetector 938a and 938b.

Therefore, an embodiment in which the quantum entanglement can be formed between the adjacent quantum bit elements without passing photons emitted from the quantum bit elements through the optical switch will be described below.

### Embodiment 1

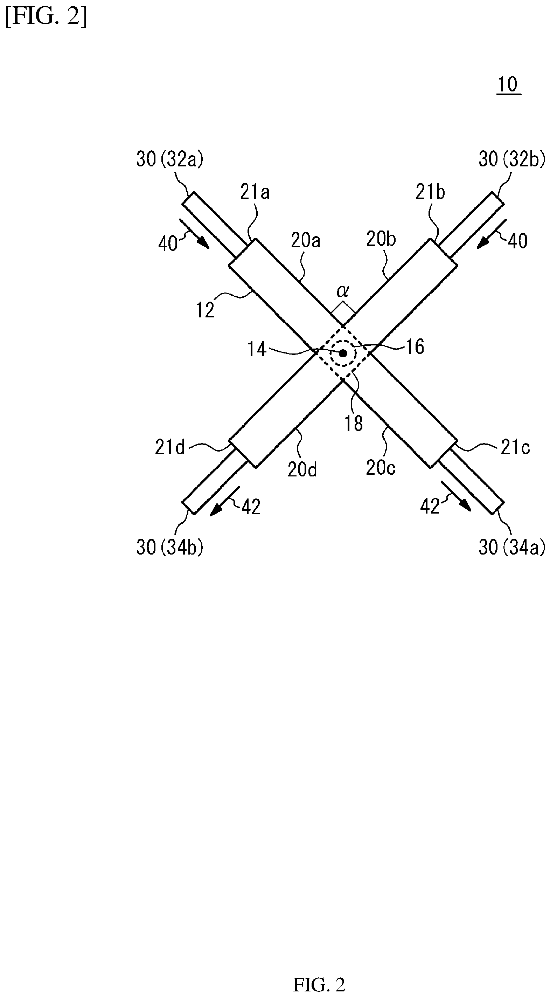

FIG. 2 is a plan view of the quantum bit element 10 according to Embodiment 1. As illustrated in FIG. 2, the quantum bit element 10 in Embodiment 1 includes a diamond crystal layer 12 and a color center 14. The diamond crystal layer 12 has a cross shape in planar view, and has a shape extending in four directions so as to be orthogonal to each other from a center point 16. That is, the diamond crystal layer 12 has a central portion 18 and extending portions 20a, 20b, 20c, and 20d extending from the central portion 18 in four directions so as to be orthogonal to each other. Here, the term "orthogonal" is not limited to a case where an angle α formed by the extending portions 20a to 20d is 90°, and a range of 90° ± 10° is allowed. The central portion 18 is, for example, a region having a square shape in planar view. The center point 16 is, for example, a circle defined to include the center of the central portion 18 and to have a certain extent in planar view. For example, the center point 16 is a circle having a diameter of 1/10 or more and 1/4 or less of the length of one side of the central portion 18. The center point 16 is not limited to a circular shape, and may have another shape such as a rectangular shape. The four extending portions 20a to 20d are congruent with each other in planar view.

The color center 14 is formed so as to overlap the center point 16 in planar view. The color center 14 is a type of complex defect formed by an impurity atom in the diamond single crystal and a vacancy adjacent to the impurity atom. The impurity atom is at least one of nitrogen (N), silicon (Si), germanium (Ge), tin (Sn), lead (Pb), and boron (B).

Optical waveguides 30 are connected to four ends 21a, 21b, 21c, and 21d of the diamond crystal layer 12, respectively. The optical waveguide 30 is formed of, for example, sapphire. The optical waveguides 30 connected to the ends 21a and 21b are, for example, input optical waveguides 32a and 32b. The optical waveguides 30 connected to the ends 21c and 21d are, for example, output optical waveguides 34a and 34b. As described above, the quantum bit element 900 in the comparative example has a one-input and one-output structure, whereas the quantum bit element 10 in Embodiment 1 has a two-input and two-output structure.

The input optical waveguides 32a and 32b transmit an optical pulse 40 for resonant excitation or initialization to be introduced to the color center 14. A photon pulse 42 of a single photon emitted from the color center 14 due to the optical pulse 40 introduced from the input optical waveguide 32a is transmitted through the output optical waveguide 34a. The photon pulse 42 of the single photon emitted from the color center 14 due to the optical pulse 40 introduced from the input optical waveguide 32b is transmitted through the output optical waveguide 34b. When the optical pulse 40 is introduced from any one of the input optical waveguides 32a and 32b toward the color center 14, the optical pulse 40 is not introduced from the other of the input optical waveguides 32a and 32b toward the color center 14. However, for purposes of illustration, FIG. 2 illustrates optical pulses 40 in both the input optical waveguides 32a and 32b, and the photon pulses 42 in both the output optical waveguides 34a and 34b (the same applies to similar drawings below).

The thickness of the diamond crystal layer 12 is, for example, from 100 nm to 300 nm. The widths of the extending portions 20a to 20d are, for example, 250 nm to 400 nm. The thickness of the optical waveguide 30 is, for example, from 100 nm to 300 nm. The width of the optical waveguide 30 is, for example, from 200 nm to 700 nm.

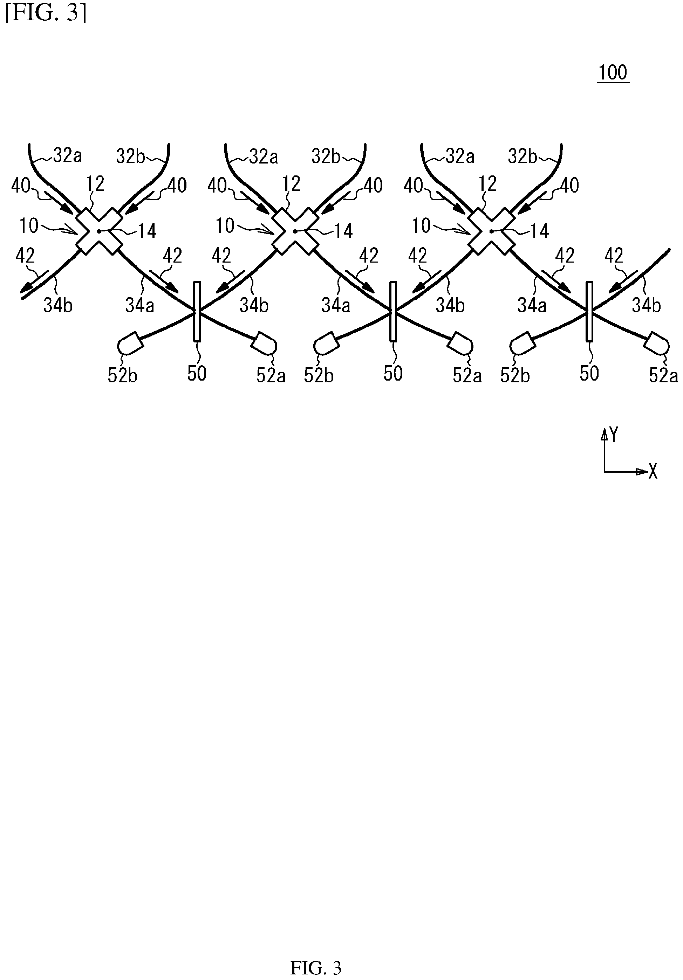

FIG. 3 is a plan view of a quantum device 100 according to Embodiment 1. As illustrated in FIG. 3, in the quantum device 100 according to Embodiment 1, a plurality of quantum bit elements 10 are provided side by side in the X direction. A common beam splitter 50 is connected to the output optical waveguide 34a connected to one of the adjacent quantum bit elements 10 and the output optical waveguide 34b connected to the other thereof. The beam splitter 50 is an example of a branching element. The beam splitter 50 is connected to photodetectors 52a and 52b. The photodetectors 52a and 52b are single-photon photodetectors, and are, for example, single photon avalanche photo detectors (SPAD) or superconducting nanowire single photon detectors (SNSPD).

The photon pulse 42 emitted to the output optical waveguide 34a from one of the adjacent quantum bit elements 10 and the photon pulse 42 emitted to the output optical waveguide 34b from the other thereof are introduced into the common beam splitter 50. The beam splitter 50 branches, in a first direction or a second direction, the photon pulse 42 emitted to the output optical waveguide 34a from one of the adjacent quantum bit elements 10 and the photon pulse 42 emitted to the output optical waveguide 34b from the other thereof. In the beam splitter 50, for example, the first direction and the second direction are orthogonal to each other, and the probabilities of being branched in the first direction and the second direction are 50 %, respectively. The beam splitter 50 is, for example, a half mirror that divides an amount of transmitted light and an amount of reflected light at a ratio of approximately 1:1. The photon pulse 42 emitted from one of the adjacent quantum bit element 10 strikes one surface of the half mirror and is reflected or transmitted. The photon pulse 42 emitted from the other thereof strikes the other surface of the half mirror and is reflected or transmitted. The photodetector 52a detects the photon pulse 42 that enters and transmits through one surface of the half mirror, or the photon pulse 42 that enters and is reflected by the other surface thereof. The photodetector 52b detects the photon pulse 42 that enters and is reflected by one surface of the half mirror, or the photon pulse 42 that enters and transmits through the other surface thereof. The photon pulse 42 emitted from one of the adjacent quantum bit elements 10 and the photon pulse 42 emitted from the other thereof merge at the beam splitter 50, thereby forming two-photon correlation. Accordingly, the quantum entanglement can be formed between the adjacent quantum bit elements 10.

According to Embodiment 1, as illustrated in FIG. 2, the quantum bit element 10 includes the diamond crystal layer 12 and the color center 14 present in the diamond crystal layer 12. The diamond crystal layer 12 has the central portion 18 and the extending portions 20a to 20d connected to the central portion 18 and extending in four directions from the central portion 18. The color center 14 is formed in the central portion 18 of the diamond crystal layer 12. The input optical waveguides 32a and 32b for transmitting the optical pulse 40 introduced into the color center 14 are connected to the ends 21a and 21b of the two extending portions 20a and 20b of the diamond crystal layer 12. The output optical waveguides 34a and 34b for transmitting the photon pulse 42 emitted from the color center 14 are connected to the ends 21c and 21d of the remaining two extending portions 20c and 20d of the diamond crystal layer 12. As described above, since the quantum bit element 10 has a two-input and two-output configuration, as described in FIG. 3, the quantum entanglement can be formed between the quantum bit elements 10 adjacent to each other on both sides in the X direction without using the optical switch as in the comparative example.

In addition, in Embodiment 1, as illustrated in FIG. 2, the color center 14 is present so as to overlap the center point 16 of the diamond crystal layer 12 in planar view. This makes it easier for the optical pulse 40 to be introduced into the color center 14 from either of the input optical waveguides 32a and 32b, and for the photon pulse 42 emitted from the color center 14 to be transmitted to either of the output optical waveguides 34a and 34b.

In Embodiment 1, as illustrated in FIG. 3, the beam splitter 50 is connected to the output optical waveguide 34a connected to one of the quantum bit elements 10 adjacent in the X direction and the output optical waveguide 34b connected to the other of the quantum bit elements 10. The photon pulse 42 branched by the beam splitter 50 is detected by the photodetector 52a or 52b. Therefore, the quantum entanglement can be formed between the quantum bit elements 10 adjacent to each other on both sides in the X direction.

### Embodiment 2

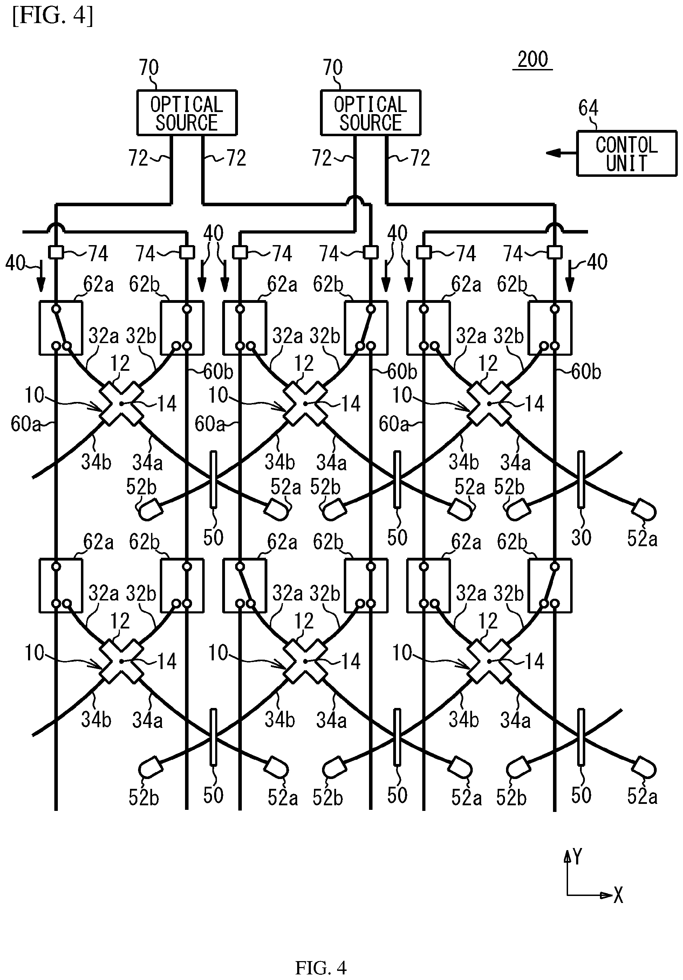

FIG. 4 is a plan view of a quantum device 200 according to Embodiment 2. As illustrated in FIG. 4, in the quantum device 200 according to Embodiment 2, the plurality of quantum bit elements 10 are provided in a lattice shape in the X direction and the Y direction. The respective input optical waveguides 32a of the quantum bit elements 10 arranged in the Y direction are connected to common optical waveguides 60a via adjusting elements 62a. The adjusting element 62a is an element for adjusting the ratio of the optical pulse 40 transmitted to the common optical waveguide 60a and the optical pulse 40 transmitted to the input optical waveguide 32a, and in Embodiment 2, the adjusting element 62a is an optical switch for switching so that the optical pulse 40 is transmitted to only any one of the common optical waveguide 60a or the input optical waveguide 32a. Similarly, the respective input optical waveguides 32b of the quantum bit elements 10 arranged in the Y direction are connected to the common optical waveguides 60b via adjusting elements 62b. The adjusting element 62b is a device for adjusting the ratio of the optical pulse 40 transmitted to the common optical waveguide 60b and the optical pulse 40 transmitted to the input optical waveguide 32b, and in Embodiment 2, the adjusting element 62b is an optical switch for switching so that the optical pulse 40 is transmitted to only any one of the common optical waveguide 60b and the input optical waveguide 32b.

The quantum device 200 includes a plurality of optical sources 70. The optical source 70 is, for example, a laser optical source, and generates the optical pulse 40 for resonance excitation or initialization. The common optical waveguide 60a to which the input optical waveguide 32a of one of the quantum bit elements 10 adjacent in the X direction is connected and the common optical waveguide 60b to which the input optical waveguide 32b of the other quantum bit element 10 is connected are connected to one common optical source 70. The optical pulses 40 output from the optical source 70 are introduced into the common optical waveguides 60a and 60b via optical fibers 72 and optical connectors 74.

The optical source 70 is electrically connected to a control unit 64, and outputs the optical pulse 40 based on an instruction from the control unit 64. The adjusting elements 62a and 62b are also electrically connected to the control unit 64, and switch the paths of the common optical waveguides and the optical waveguides based on the instruction from the control unit 64. The control unit 64 may perform processing by a processor such as a central processing unit (CPU) in cooperation with a program. The control unit 64 may be a general purpose circuit or a circuit designed exclusively for the control unit 64. The other configurations are the same as those in FIG. 3 of Embodiment 1, and thus the description thereof will be omitted.

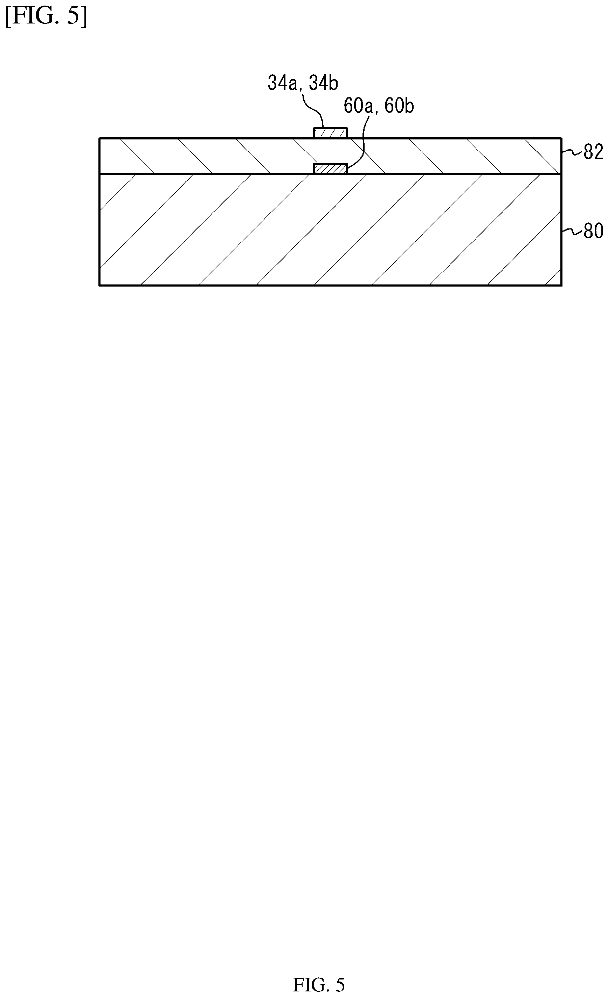

FIG. 5 is a cross-sectional view of a portion where the common optical waveguides 60a and 60b and the output optical waveguides 34a and 34b intersect each other in Embodiment 2. As illustrated in FIG. 5, the common optical waveguides 60a and 60b are provided on a substrate 80. At least a portion of the substrate 80 that is in contact with the common optical waveguides 60a and 60b is formed of a material having a refraction index smaller than that of the common optical waveguides 60a and 60b, and for example, the substrate 80 is a silicon substrate with an oxide film when the common optical waveguides 60a and 60b are sapphire. A film 82 is provided on the substrate 80 so as to cover the common optical waveguides 60a and 60b, and the output optical waveguides 34a and 34b are provided on the film 82. The film 82 is formed of a material having a refraction index smaller than that of the common optical waveguides 60a and 60b and the output optical waveguides 34a and 34b, and is, for example, a silicon oxide film when the common optical waveguides 60a and 60b and the output optical waveguides 34a and 34b and are sapphire. In this way, the common optical waveguides 60a and 60b and the output optical waveguides 34a and 34b are provided in different layers and intersect each other without contacting each other.

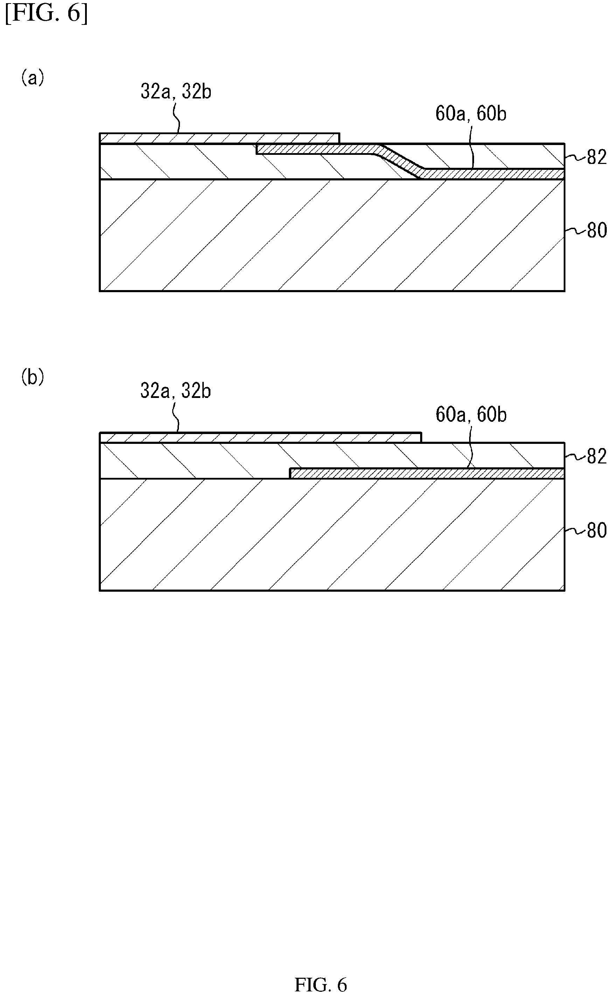

FIGs. 6(a) and 6(b) are cross-sectional views illustrating transmission of the optical pulse 40 from the common optical waveguides 60a and 60b to the input optical waveguides 32a and 32b in Embodiment 2. As illustrated in FIG. 6(a), the common optical waveguides 60a and 60b provided on the substrate 80 extend toward the input optical waveguides 32a and 32b provided on the film 82 and are in contact with the input optical waveguides 32a and 32b. By appropriately setting a contact length between the common optical waveguides 60a and 60b and the input optical waveguides 32a and 32b, light is transferred from the common optical waveguides 60a and 60b to the input optical waveguides 32a and 32b. In this way, the optical pulse 40 may be transmitted from the common optical waveguides 60a and 60b to the input optical waveguides 32a and 32b.

As illustrated in FIG. 6(b), the common optical waveguides 60a and 60b provided on the substrate 80 and the input optical waveguides 32a and 32b provided on the film 82 are provided in parallel with a certain interval therebetween with the film 82 interposed therebetween. By appropriately setting the interval between the common optical waveguides 60a and 60b and the input optical waveguides 32a and 32b and a parallel length, light is transferred from the common optical waveguides 60a and 60b to the input optical waveguides 32a and 32b. In this way, the optical pulse 40 may be transmitted from the common optical waveguides 60a and 60b to the input optical waveguides 32a and 32b.

### [Control Method]

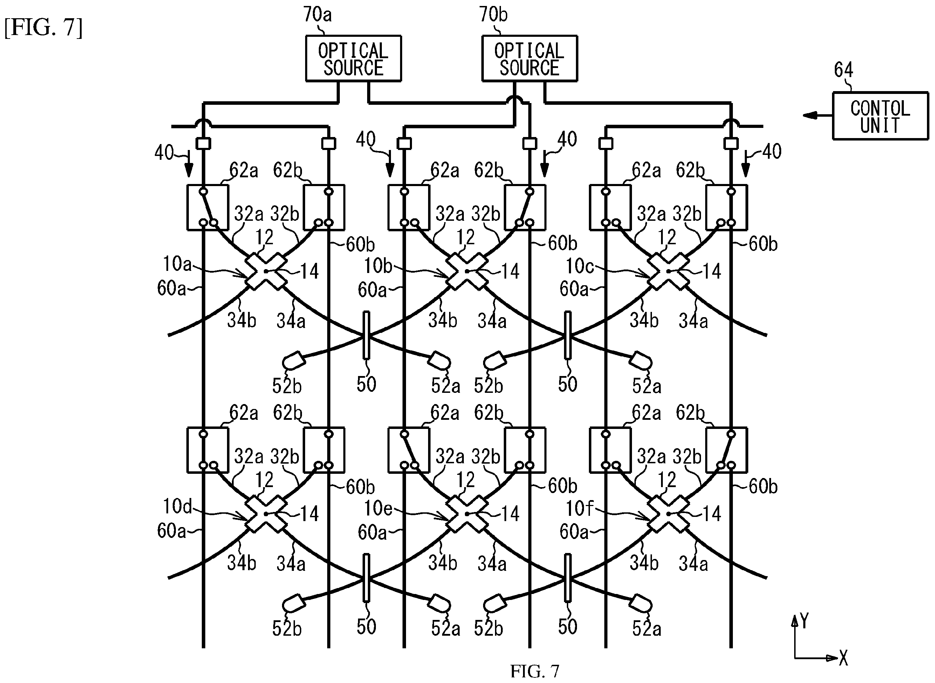

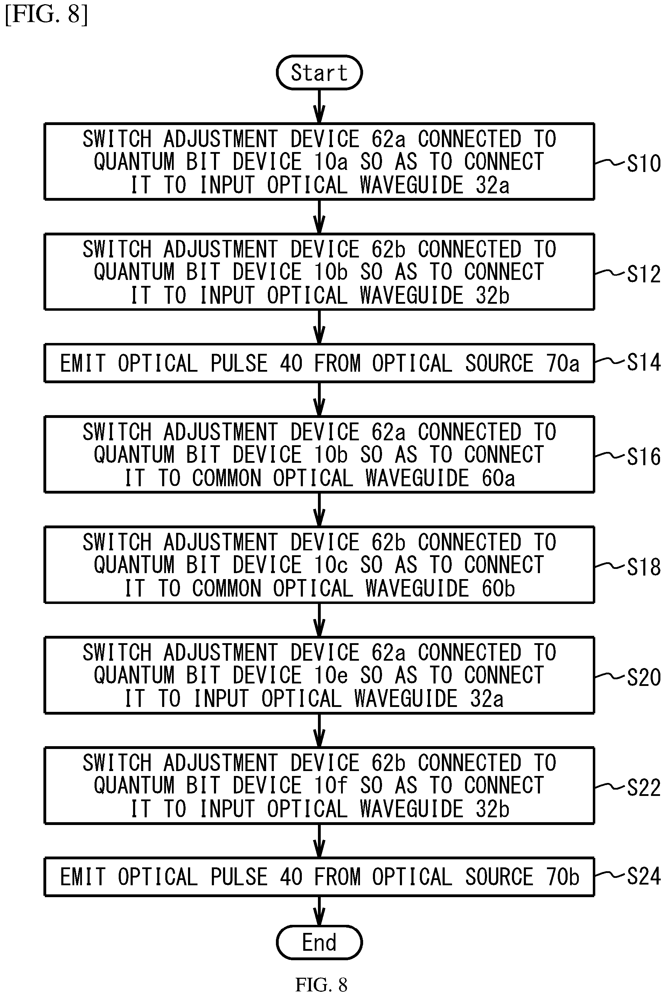

An example of control for forming the quantum entanglement between the quantum bit elements 10 adjacent to each other in the X direction will be described. FIG. 7 is a plan view for explaining an example of control by the control unit 64 in Embodiment 2. FIG. 8 is a flowchart illustrating an example of control by the control unit 64 in Embodiment 2. As illustrated in FIG. 7, the plurality of quantum bit elements 10 are referred to as quantum bit elements 10a, 10b, 10c, 10d, 10e, and 10f. The optical source 70 that is connected to the common optical waveguides 60a connected to the input optical waveguides 32a of the quantum bit elements 10a and 10d and the common optical waveguides 60b connected to the input optical waveguides 32b of the quantum bit elements 10b and 10e is referred to as an optical source 70a. The optical source 70 that is connected to the common optical waveguides 60a connected to the input optical waveguides 32a of the quantum bit elements 10b and 10e and the common optical waveguides 60b connected to the input optical waveguides 32b of the quantum bit elements 10c and 10f is referred to as an optical source 70b. In FIGs. 7 and 8, a case where the quantum entanglement is formed between the quantum bit elements 10a and 10b and between the quantum bit elements 10e and 10f will be described.

As illustrated in FIGs. 7 and 8, the control unit 64 switches the adjusting element 62a connected to the quantum bit element 10a so as to connect it to the input optical waveguide 32a (step S10). Next, the control unit 64 switches the adjusting element 62b connected to the quantum bit element 10b so as to connect it to the input optical waveguide 32b (step S12). Next, the control unit 64 causes the optical source 70a to emit the optical pulse 40 (step S14). As a result, the optical pulses 40 are introduced into the quantum bit elements 10a and 10b, and the photon pulses 42 emitted from the respective quantum bit elements 10a and 10b enter the common beam splitter 50. Therefore, the quantum entanglement can be formed between the quantum bit elements 10a and 10b. The order of the steps S10 and S12 may be changed, or the steps may be performed simultaneously.

The control unit 64 switches the adjusting element 62a connected to the quantum bit element 10b so as to connect it to the common optical waveguide 60a (step S16). Next, the control unit 64 switches the adjusting element 62b connected to the quantum bit element 10c so as to connect it to the common optical waveguide 60b (step S18). Next, the control unit 64 switches the adjusting element 62a connected to the quantum bit element 10e so as to connect it to the input optical waveguide 32a (step S20). Next, the control unit 64 switches the adjusting element 62b connected to the quantum bit element 10f so as to connect it to the input optical waveguide 32b (step S22). Next, the control unit 64 causes the optical source 70b to emit the optical pulse 40 (step S24). As a result, the optical pulses 40 are introduced into the quantum bit elements 10e and 10f, and the photon pulses 42 emitted from the respective quantum bit elements 10e and 10f enter the common beam splitter 50. Therefore, the quantum entanglement can be formed between the quantum bit elements 10e and 10f. The order of the steps S16 to S22 may be changed, or the steps S16 to S22 may be performed simultaneously.

The order of the steps S10 to S14 and the steps S16 to S24 may be changed, and the quantum entanglement may be formed between the quantum bit elements 10e and 10f, and then the quantum entanglement may be formed between the quantum bit elements 10a and 10b. Further, the formation of the quantum entanglement between the quantum bit elements 10a and 10b and the formation of the quantum entanglement between the quantum bit elements 10e and 10f may be performed at the same time.

According to Embodiment 2, as illustrated in FIG. 4, the common optical waveguides 60a and 60b are connected to the respective input optical waveguides 32a and 32b of the two or more quantum bit elements 10 arranged in the Y direction. The adjusting elements 62a and 62b, which are optical switches for switching the transmission direction of the optical pulse 40, are provided between the common optical waveguides 60a and 60b and the input optical waveguides 32a and 32b. As a result, as described with reference to FIGs. 7 and 8, the quantum entanglement can be formed not only between the quantum bit elements adjacent in the X direction at a first stage in the Y direction but also between the quantum bit elements adjacent in the X direction at a second and subsequent stages.

In Embodiment 2, as illustrated in FIG. 5, the output optical waveguides 34a and 34b and the common optical waveguides 60a and 60b are provided in different layers, and the film 82 is provided between the output optical waveguides 34a and 34b and the common optical waveguides 60a and 60b. Thus, even when the common optical waveguides 60a and 60b are provided, a configuration in which the common optical waveguides 60a and 60b do not contact the output optical waveguides 34a and 34b can be easily obtained.

### Embodiment 3

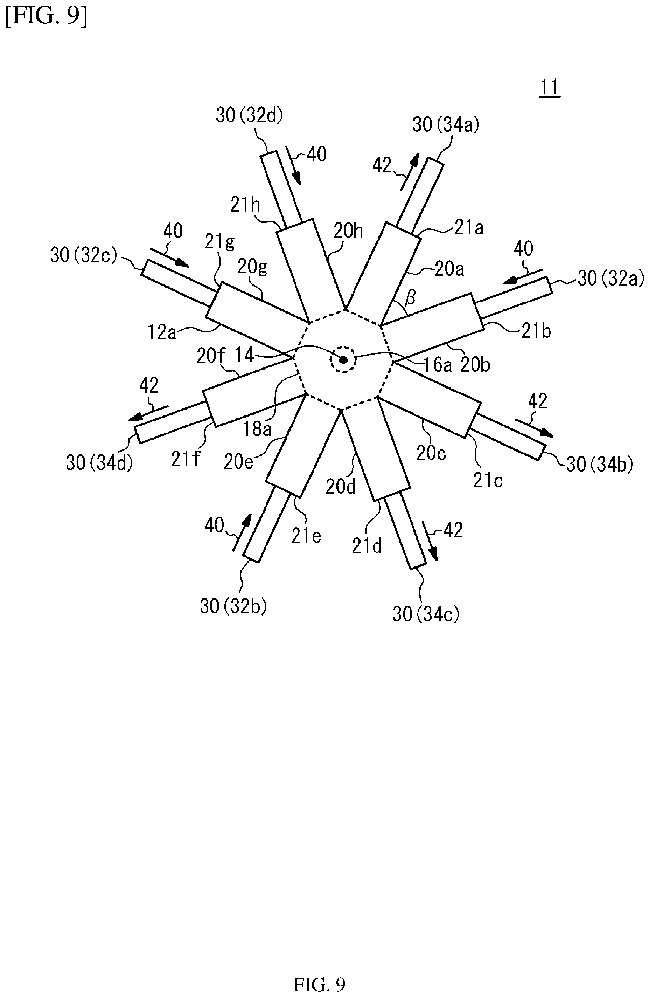

FIG. 9 is a plan view of a quantum bit element 11 according to Embodiment 3. As illustrated in FIG. 9, the quantum bit element 11 in Embodiment 3 includes a diamond crystal layer 12a having a shape extending in eight directions from a center point 16a at equal angles to each other. That is, the diamond crystal layer 12a has a central portion 18a, and extending portions 20a, 20b, 20c, 20d, 20e, 20f, 20g and 20h extending from the central portion 18a in eight directions at equal angles to each other. Here, the equal angle is not limited to a case where an angle β formed by the extending portions 20a to 20h is 45 °, and a range of 45 ° ± 5 ° is allowed. The central portion 18a is, for example, a region having a regular octagonal shape in planar view. The center point 16a is, for example, a circle defined to include the center of the central portion 18a and to have a certain extent in planar view. For example, the center point 16a is a circle having a radius of 1/5 and more and 1/2 and less of the length of one side of the central portion 18a. The color center 14 is present so as to overlap the center point 16a in planar view. The center point 16a is not limited to a circular shape, and may be another shape such as a rectangular shape. The eight extending portions 20a to 20h are congruent with each other in planar view.

The optical waveguides 30 are connected to eight ends 21a, 21b, 21c, 21d, 21f, 21d, 21g, and 21h of the diamond crystal layer 12a, respectively. The optical waveguides 30 connected to the ends 21b, 21e, 21g, and 21h are, for example, input optical waveguides 32a, 32b, 32c, and 32d. The optical waveguides 30 connected to the ends 21a, 21c, 21d, and 21f are, for example, the output optical waveguides 34a, 34b, 34c, and 34d. As described above, the quantum bit element 11 in Embodiment 2 has a four-input four-output structure.

The input optical waveguides 32a to 32d transmit the optical pulse 40 introduced into the color center 14. The photon pulse 42 of the single photon emitted from the color center 14 due to the optical pulse 40 introduced from the input optical waveguide 32a is transmitted through the output optical waveguide 34d. The photon pulse 42 of the single photon emitted from the color center 14 due to the optical pulse 40 introduced from the input optical waveguide 32b is transmitted through the output optical waveguide 34a. The photon pulse 42 of the single photon emitted from the color center 14 due to the optical pulse 40 introduced from the input optical waveguide 32c is transmitted through the output optical waveguide 34b. The photon pulse 42 of the single photon emitted from the color center 14 due to the optical pulse 40 introduced from the input optical waveguide 32d is transmitted through the output optical waveguide 34c.

The thickness of the diamond crystal layer 12a is, for example, from 100 nm to 300 nm. The widths of the extending portions 20a to 20h are, for example, 250 nm to 400 nm. The thickness of the optical waveguide 30 is, for example, from 100 nm to 300 nm. The widths of the optical waveguide 30 are, for example, from 200 nm to 700 nm.

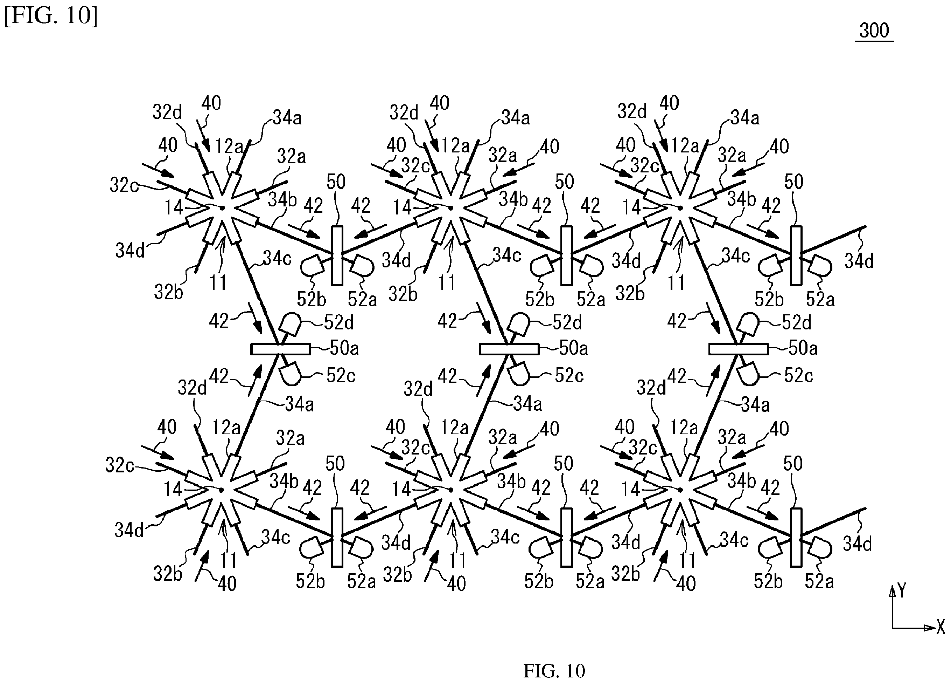

FIG. 10 is a plan view of a quantum device 300 according to Embodiment 3. As illustrated in FIG. 10, in the quantum device 300 according to Embodiment 3, the plurality of quantum bit elements 11 are provided in a lattice shape to be arranged in the X direction and the Y direction. The common beam splitter 50 is connected to the output optical waveguides 34b connected to one of the quantum bit elements 11 adjacent in the X direction and the output optical waveguides 34d connected to the other thereof. The beam splitter 50 is connected to the photodetectors 52a and 52b. Accordingly, the photon pulses 42 emitted from the two quantum bit elements 11 adjacent to each other in the X direction are introduced into the common beam splitter 50 and detected by the photodetector 52a or 52b. Therefore, the quantum entanglement can be formed between the quantum bit elements 11 adjacent to each other in the X direction.

A common beam splitter 50a is connected to the output optical waveguide 34a connected to one of the quantum bit elements 11 adjacent to each other in the Y direction and the output optical waveguide 34a connected to the other thereof. The beam splitter 50a is connected to photodetectors 52c and 52d. Accordingly, the photon pulses 42 emitted from the two quantum bit elements 11 adjacent to each other in the Y direction are introduced into the common beam splitter 50a and detected by the photodetector 52c or 52d. Therefore, the quantum entanglement can be formed between the quantum bit elements 11 adjacent to each other in the Y direction.

According to Embodiment 3, as illustrated in FIG. 9, the quantum bit element 11 includes the diamond crystal layer 12a and the color center 14 present in the diamond crystal layer 12a. The diamond crystal layer 12a has the center point 16a and has a shape extending in eight directions from the center point 16a at equal angles to each other. The eight ends 21a to 21h of the diamond layer 12a are respectively connected to the optical waveguides 30, which are the input optical waveguides 32a to 32d for transmitting the optical pulses 40 introduced into the color center 14 or the output optical waveguides 34a to 34d for transmitting the photon pulses 42 emitted from the color center 14. In this way, since the quantum bit element 11 has a four-input four-output configuration, the quantum entanglement can be formed between the quantum bit elements 11 adjacent to each other on both sides in the X direction and the Y direction as described with reference to FIG. 10.

In addition, in Embodiment 3, as illustrated in FIG. 9, the color center 14 is present so as to overlap the center point 16a of the diamond crystal layer 12a in planar view. This makes it easier for the optical pulse 40 to be introduced into the color center 14 when the optical pulse 40 is introduced from any of the input optical waveguides 32a to 32d, and makes it easier for the photon pulse 42 emitted from the color center 14 to be transmitted to any of the output optical waveguides 34a to 34d.

In Embodiment 3, as illustrated in FIG. 10, the beam splitter 50 is connected to the output optical waveguide 34b connected to one of the quantum bit elements 11 adjacent in the X direction and the output optical waveguide 34d connected to the other thereof. The photon pulse 42 branched by the beam splitter 50 is detected by the photodetector 52a or 52b. The beam splitter 50a is connected to the output optical waveguide 34c connected to one of the quantum bit elements 11 adjacent to each other in the Y direction, and the output optical waveguides 34a connected to the other of the quantum bit elements 11. The photon pulse 42 branched by the beam splitter 50a is detected by the photodetector 52c or 52d. With such a configuration, the quantum entanglement can be formed between the quantum bit elements 11 adjacent to each other on both sides in the X direction and the Y direction.

### Embodiment 4

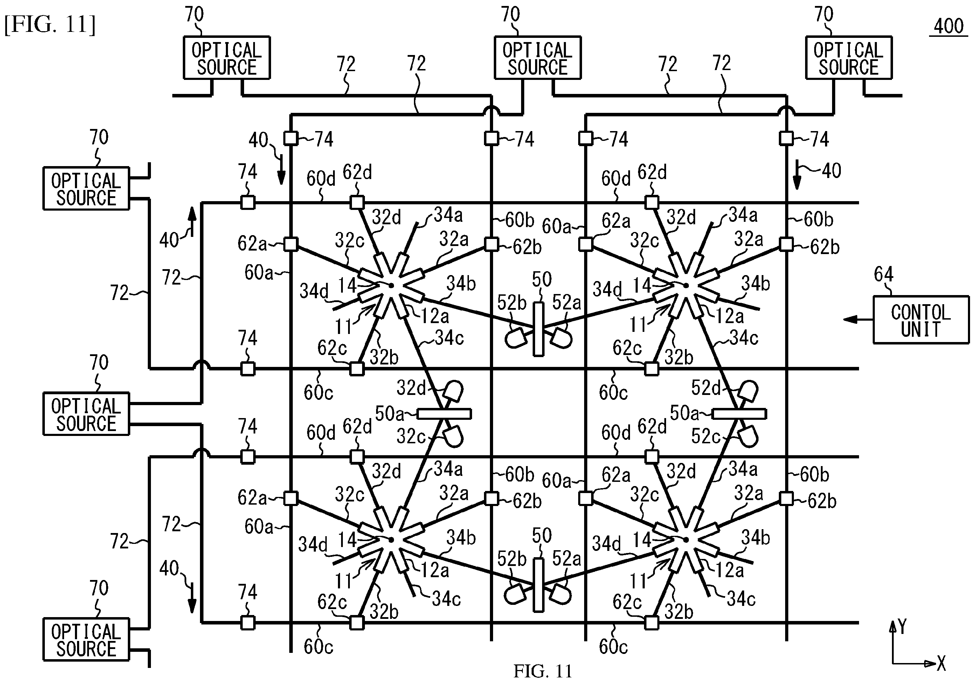

FIG. 11 is a plan view of a quantum device 400 according to Embodiment 4. As illustrated in FIG. 11, in the quantum device 400 according to Embodiment 4, the plurality of quantum bit elements 11 are provided in a lattice shape to be arranged in the X direction and the Y direction. The respective input optical waveguides 32c of the quantum bit elements 11 arranged in the Y direction are connected to the common optical waveguides 60a via the adjusting elements 62a. Similarly, the respective input optical waveguides 32a of the quantum bit elements 11 arranged in the Y direction are connected to the common optical waveguides 60b via the adjusting elements 62b. Further, the respective input optical waveguides 32b of the quantum bit elements 11 arranged in the X direction are connected to common optical waveguides 60c via adjusting elements 62c, and the respective input optical waveguides 32d are connected to common optical waveguides 60d via adjusting elements 62d. The adjusting elements 62a, 62b, 62c, and 62d are optical switches as in Embodiment 2, but are illustrated in a simplified manner for the sake of clarity.

The quantum device 400 includes the plurality of optical sources 70. The common optical waveguide 60a connected to the input optical waveguide 32c of one of the quantum bit elements 11 adjacent to each other in the X direction and the common optical waveguide 60b connected to the input optical waveguide 32a of the other of the quantum bit elements 11 are connected to one common optical source 70. The optical pulses 40 output from the optical source 70 are introduced into the common optical waveguides 60a and 60b via the optical fibers 72 and the optical connectors 74. Similarly, the common optical waveguide 60c connected to the input optical waveguide 32b of one of the quantum bit elements 11 adjacent to each other in the Y direction and the common optical waveguide 60d connected to the input optical waveguide 32d of the other of the quantum bit elements 11 are connected to one common optical source 70. The optical pulses 40 output from the optical source 70 are introduced into the common optical waveguides 60c and 60d via the optical fibers 72 and the optical connectors 74.

The optical source 70 is electrically connected to the control unit 64, and outputs the optical pulse 40 based on the instruction of the control unit 64, as in Embodiment 2. As in Embodiment 2, the adjusting elements 62a to 62d are also electrically connected to the control unit 64, and switch the paths of the common optical waveguides and the optical waveguides based on instructions from the control unit 64. The other configurations are the same as those of Embodiment 3 illustrated in FIG. 10, and thus the description thereof will be omitted.

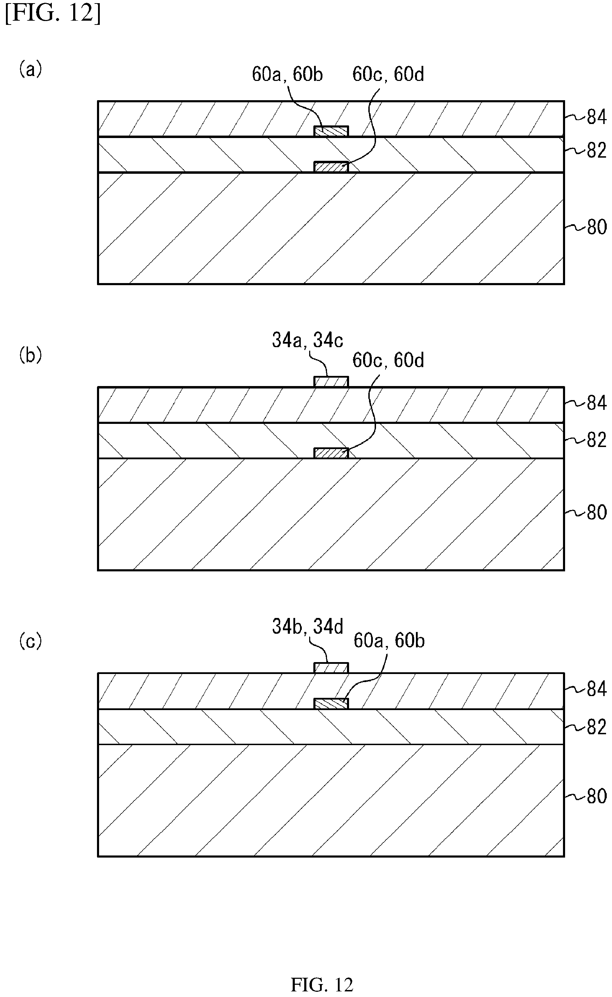

FIG. 12(a) to 12(c) are cross-sectional views of a portion where the common optical waveguides 60a and 60b, the common optical waveguides 60c and 60d, and the output optical waveguides 34a to 34d intersect each other in Embodiment 4. As illustrated in FIG. 12(a) to 12(c), the common optical waveguides 60c and 60d, the common optical waveguides 60a and 60b, and the output optical waveguides 34a to 34d are provided in different layers in this order. That is, the common optical waveguides 60c and 60d are provided on the substrate 80. The film 82 is provided on the substrate 80 so as to cover the common optical waveguides 60c and 60d, and the common optical waveguides 60a and 60b are provided on the film 82. A film 84 is provided on the film 82 so as to cover the common optical waveguides 60a and 60b. The output optical waveguides 34a to 34d are provided on the film 84. Thus, the common optical waveguides 60c and 60d, the common optical waveguides 60a and 60b, and the output optical waveguides 34a to 34d intersect with each other without contact.

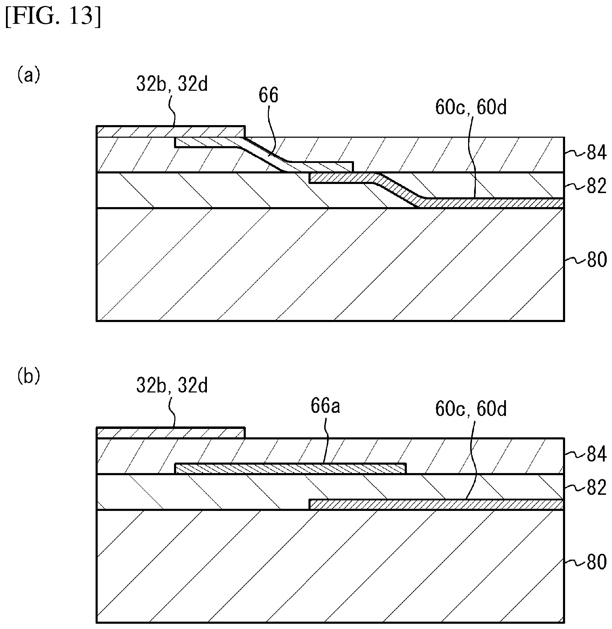

FIGs. 13(a) and 13(b) are cross-sectional views for explaining transmission of the optical pulse 40 from the common optical waveguides 60c and 60d to the input optical waveguides 32b and 32d in Embodiment 4. As illustrated in FIG. 13(a), an intermediate optical waveguide 66 is provided in the film 84 so as to be in contact with the common optical waveguides 60c and 60d and the input optical waveguides 32b and 32d. By appropriately setting the contact length between the common optical waveguides 60c and 60d and the intermediate optical waveguide 66, light is transferred from the common optical waveguides 60c and 60d to the intermediate optical waveguide 66. Similarly, by appropriately setting the contact length between the input optical waveguides 32b and 32d and the intermediate optical waveguide 66, light is transferred from the intermediate optical waveguide 66 to the input optical waveguides 32b and 32d. In this manner, the optical pulses 40 may be transmitted from the common optical waveguides 60c and 60d to the input optical waveguides 32b and 32d via the intermediate optical waveguide 66.

As illustrated in FIG. 13(b), an intermediate optical waveguide 66a is provided on the film 84, which is spaced apart from the common optical waveguides 60c and 60d and the input optical waveguides 32b, 32d with the films 82 and 84 interposed therebetween and is arranged in parallel to the common optical waveguides 60c and 60d and the input optical waveguides 32b and 32d by a certain distance. By appropriately setting the interval between the common optical waveguides 60c and 60d and the intermediate optical waveguide 66a and the parallel length thereof, light is transferred from the common optical waveguides 60c and 60d to the intermediate optical waveguide 66a. Similarly, by appropriately setting the interval between the input optical waveguides 32b and 32d and the intermediate optical waveguide 66a and the parallel length thereof, light is transferred from the intermediate optical waveguide 66a to the input optical waveguides 32b and 32d. In this way, the optical pulse 40 may be transmitted from the common optical waveguides 60c and 60d to the input optical waveguides 32b and 32d via the intermediate optical waveguide 66a.

Note that the transmission of the optical pulse 40 from the common optical waveguides 60a and 60b provided on the film 82 to the input optical waveguides 32a and 32c provided on the film 84 is the same as in the case of FIGs. 6(a) and 6(b), and therefore, the description thereof is omitted here.

### [Control Method]

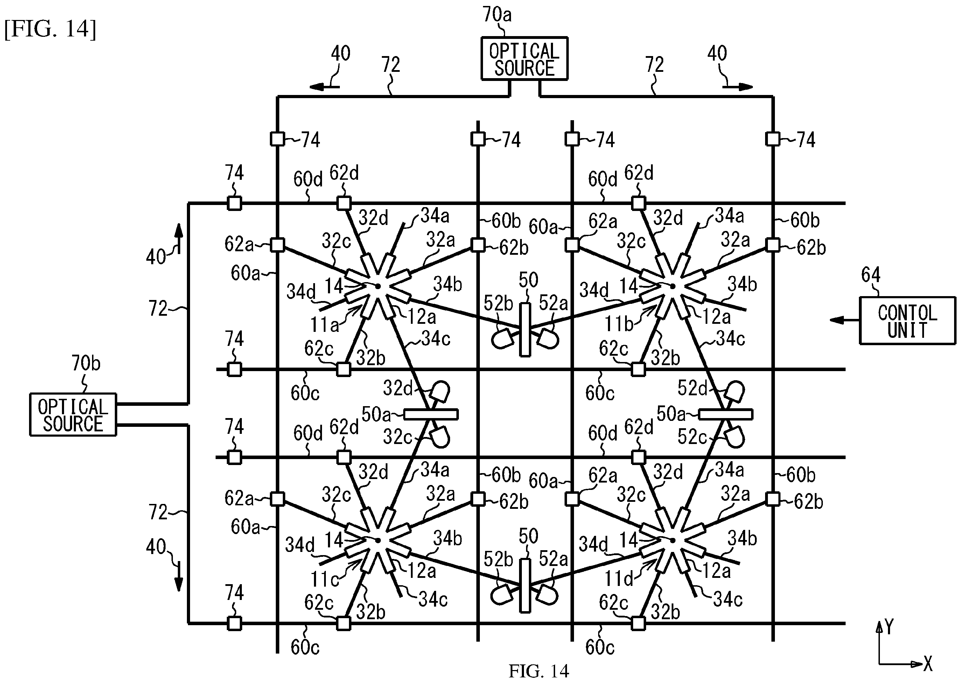

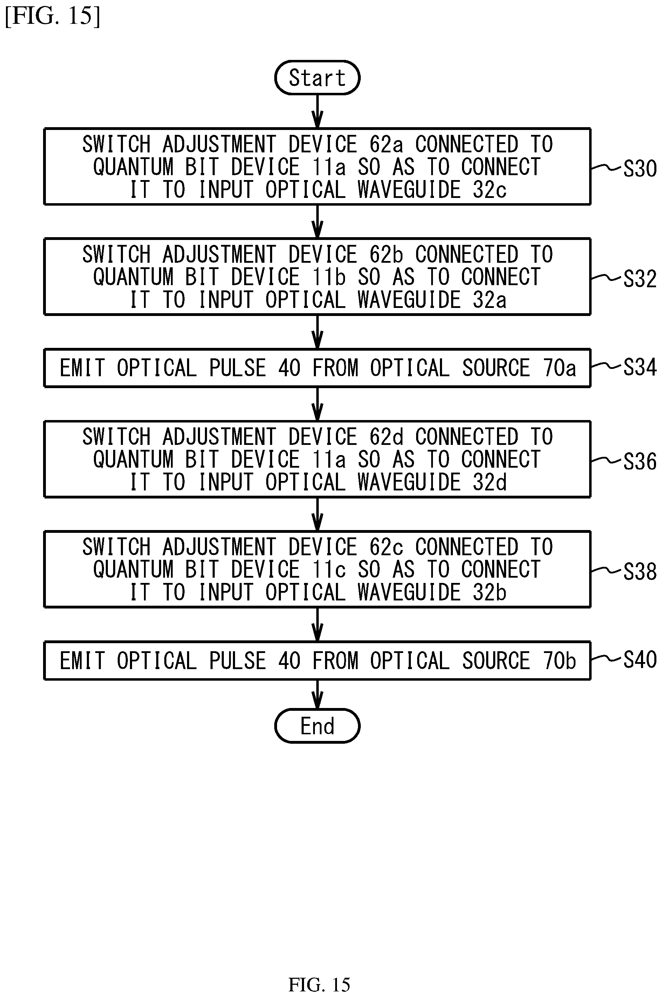

An example of control for forming the quantum entanglement between the quantum bit elements 11 adjacent to each other in the X direction and the Y direction will be described. FIG. 14 is a plan view for explaining an example of control by the control unit 64 in Embodiment 4. FIG. 15 is a flowchart illustrating an example of control by the control unit 64 in Embodiment 4. As illustrated in FIG. 14, the plurality of quantum bit elements 11 are referred to as quantum bit elements 11a, 11b, 11c, and 11d. The optical source 70 that is connected to the common optical waveguides 60a connected to the input optical waveguides 32c of the quantum bit elements 11a and 11c and the common optical waveguides 60b connected to the input optical waveguides 32a of the quantum bit elements 11b and 11d is referred to as the optical source 70a. The optical source 70 that is connected to the common optical waveguides 60d connected to the input optical waveguides 32d of the quantum bit elements 10a and 10b and the common optical waveguides 60c connected to the input optical waveguides 32b of the quantum bit elements 11c and 11d is referred to as the optical source 70b. In FIGs. 14 and 15, a case where the quantum entanglement is formed between the quantum bit elements 11a and 11b adjacent to each other in the X direction and between the quantum bit elements 11a and 11c adjacent to each other in the Y direction will be described.

As illustrated in FIGs. 14 and 15, the control unit 64 switches the adjusting element 62a connected to the quantum bit element 11a so as to connect it to the input optical waveguide 32c (step S30). Next, the control unit 64 switches the adjusting element 62b connected to the quantum bit element 11b so as to connect it to the input optical waveguide 32a (step S32). Next, the control unit 64 causes the optical source 70a to emit the optical pulse 40 (step S34). As a result, the optical pulses 40 are introduced into the quantum bit elements 11a and 11b, and the photon pulses 42 emitted from the quantum bit elements 11a and 11b enter the common beam splitter 50. Therefore, the quantum entanglement can be formed between the quantum bit elements 11a and 11b adjacent to each other in the X direction. The order of the steps S30 and S32 may be changed, or the steps may be performed simultaneously.

The control unit 64 switches the adjusting element 62d connected to the quantum bit element 11a so as to connect it to the input optical waveguide 32d (step S36). Next, the control unit 64 switches the adjusting element 62c connected to the quantum bit element 11c so as to connect it to the input optical waveguide 32b (step S38). Next, the control unit 64 causes the optical source 70b to emit the optical pulse 40 (step S40). As a result, the optical pulses 40 are introduced into the quantum bit elements 11a and 11c, and the photon pulses 42 emitted from the quantum bit elements 11a and 11c enter the common beam splitter 50a. Therefore, the quantum entanglement can be formed between the quantum bit elements 11a and 11c adjacent to each other in the Y direction. The order of the steps S16 to S22 may be changed, or the steps S16 to S22 may be performed simultaneously.

Note that the order of the steps S30 to S34 and the steps S36 to S40 may be changed, and the quantum entanglement may be formed between the quantum bit elements 11a and 11c, and then quantum entanglement may be formed between the quantum bit elements 11a and 11b. Note that it is not desirable that the optical pulses 40 are simultaneously introduced from both the optical sources 70a and 70b into the quantum bit element 11a, and thus it is not desirable that the formation of the quantum entanglement between the quantum bit elements 11a and 11b and the formation of the quantum entanglement between the quantum bit element 11a and 11c are simultaneously performed. Note that in FIGs. 14 and 15, a case where the quantum entanglement is formed between the quantum bit elements adjacent to each other at the first stage in the X direction and the Y direction is illustrated as an example. In order to form the quantum entanglement between the quantum bit elements adjacent to each other at the second and subsequent stages, a method similar to the method illustrated in the steps S16 to S24 of FIG. 8 may be performed.

According to Embodiment 4, as illustrated in FIG. 11, the respective input optical waveguides 32b and 32d of two or more quantum bit elements 11 arranged in the X direction are connected to the common optical waveguides 60c and 60d. The adjusting elements 62c and 62d, which are optical switches for switching the transmission direction of the optical pulse 40, are provided between the input optical waveguides 32b and 32d and the common optical waveguides 60c and 60d. The respective input optical waveguides 32c and 32a of the two or more quantum bit elements 11 arranged in the Y direction are connected to the common optical waveguides 60a and 60b. The adjusting elements 62a and 62b, which are optical switches for switching the transmission direction of the optical pulse 40, are provided between the input optical waveguides 32a and 32b and the common optical waveguides 60a and 60b. This makes it possible to form the quantum entanglement not only between the quantum bit elements adjacent to each other at the first stage in the X direction and the Y direction but also between the quantum bits adjacent to each other at the second stage.

In Embodiment 4, as illustrated in FIGs. 12(a) to 12(c), the common optical waveguides 60c and 60d, the common optical waveguides 60a and 60b, and the output optical waveguides 34a to 34d are provided in different layers in this order. The film 82 is provided between the common optical waveguides 60c and 60d and the common optical waveguides 60a and 60b, and the film 84 is provided between the common optical waveguides 60a and 60b and the output optical waveguides 34b and 34d. Accordingly, even when the common optical waveguides 60a to 60d are provided, it is possible to easily obtain a configuration in which the output optical waveguides 34a to 34d, the common optical waveguides 60a and 60b, and the common optical waveguides 60c and 60d are not in contact with each other.

In Embodiment 4, as illustrated in FIG. 13(a), the intermediate optical waveguide 66 that is in contact with the common optical waveguides 60c and 60d and the input optical waveguides 32b and 32d is provided in the film 84. Alternatively, as illustrated in FIG. 13(b), the intermediate optical waveguide 66a is provided on the film 84, which is separated from the common optical waveguides 60c and 60d and the input optical waveguides 32b and 32d and is parallel to the common optical waveguides 60c and 60d and the input optical waveguides 32b and 32d. In this way, the transmission of the optical pulses 40 from the common optical waveguides 60c and 60d to the input optical waveguides 32b and 32d may be performed via the intermediate optical waveguide 66 or 66b.

### Embodiment 5

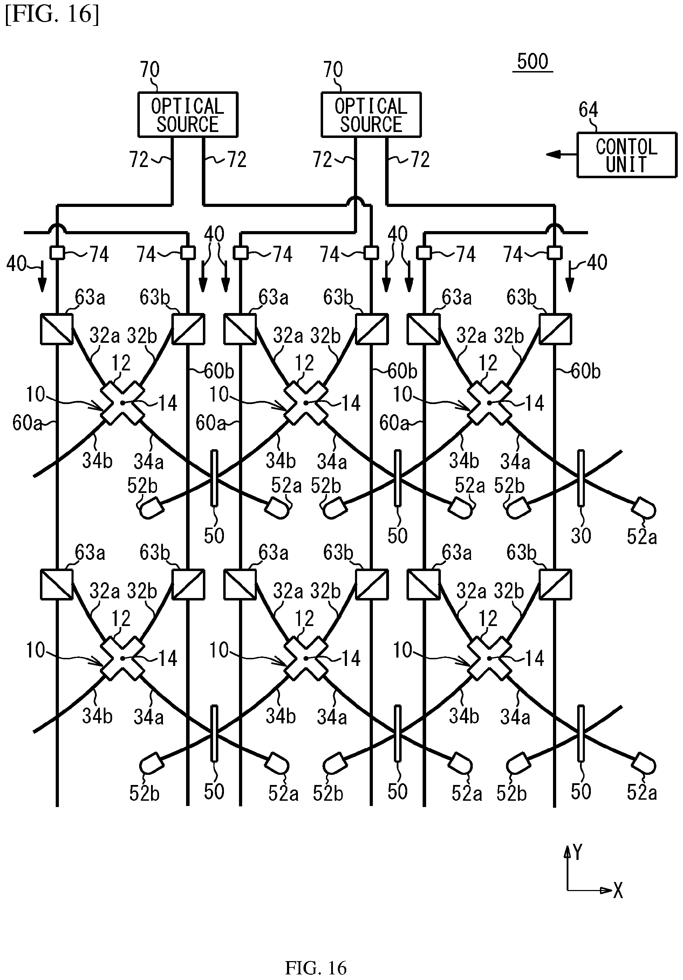

FIG. 16 is a plan view of a quantum device 500 according to Embodiment 5. As illustrated in FIG. 16, in the quantum device 500 according to Embodiment 5, an adjusting element 63a which is a beam splitter is connected between the input optical waveguide 32a and the common optical waveguide 60a. An adjusting element 63b which is a beam splitter is connected between the input optical waveguide 32b and the common optical waveguide 60b. The other configurations are the same as those in FIG. 4 of Embodiment 2, and thus the description thereof will be omitted.

In the Embodiment 5, the adjusting elements 63a and 63b, which are beam splitters, are used. This makes it possible to transmit the optical pulse 40 to both the common optical waveguides 60a and 60b and the input optical waveguides 32a and 32b while changing the ratio of transmission. Accordingly, the quantum entanglement can be formed between the quantum bit elements 10 adjacent to each other at a plurality of stages in the X direction and the Y direction simultaneously. Note that the plurality of adjusting elements may include beam splitters and optical switches.

### Embodiment 6

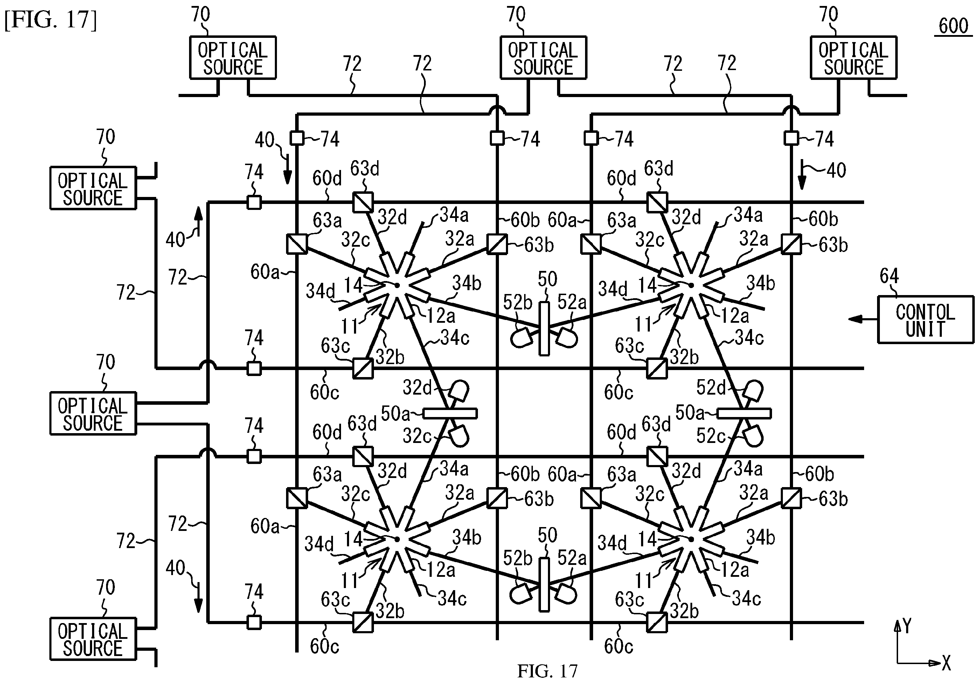

FIG. 17 is a plan view of a quantum device 600 according to Embodiment 6. As illustrated in FIG. 17, in the quantum device 600 according to Embodiment 6, the adjusting element 63a which is a beam splitter is connected between the input optical waveguide 32c and the common optical waveguides 60a. The adjusting element 63b which is a beam splitter is connected between the input optical waveguide 32a and the common optical waveguide 60b. An adjusting element 63c which is a beam splitter is connected between the input optical waveguide 32b and the common optical waveguide 60c. An adjusting element 63d which is a beam splitter is connected between the input optical waveguide 32d and the common optical waveguide 60d. The other configurations are the same as those of Embodiment 4 illustrated in FIG. 11, and thus the description thereof will be omitted.

In Embodiment 6, the adjusting elements 63a to 63d which are beam splitters are used. As a result, as in Embodiment 5, the optical pulse 40 can be transmitted to both the common optical waveguide and the input optical waveguide while changing the ratio of transmission of the optical pulse 40 to both the common optical waveguide and the input optical waveguide, or can be transmitted to only one of the common optical waveguide and the input optical waveguide. Note that the plurality of adjusting elements may include beam splitters and optical switches.

Note that in Embodiments 1 to 6, the case where the optical waveguide 30 is formed of sapphire is illustrated as an example, but the optical waveguide 30 may be formed of other materials as long as the optical pulse 40 and the photon pulse 42 can be transmitted. For example, the optical waveguide 30 may be formed of silicon oxide, silicon nitride, or silicon carbide. Although the case where the substrate 80 is a silicon substrate with an oxide film is illustrated as an example, a substrate made of another material may be used as long as another material has a refractive index smaller than that of the optical waveguide 30.

In addition, in Embodiments 1 to 6, the case where the extending portions extend in four directions or eight directions from the central portion in the diamond crystal layer is illustrated as an example, but the present disclosure is not limited to this case, and the extending portions may extend in a 2n (n is an integer of 2 or more) directions from the central portion.

Although the embodiments of the present invention have been described in detail above, the present invention is not limited to the specific embodiments, and various modifications and changes can be made within the scope of the gist of the present invention described in the claims.

### DESCRIPTION OF REFERENCE

10, 10a, 10b, 10c, 10d, 10e. 10f quantum bit element, 11, 11a, 11b, 11c, 11d quantum bit element, 12, 12a diamond crystal layer, 14 color center, 16, 16a center point, 18, 18a center portion, 20a, 20b, 20c, 20d, 20e, 20f, 20g, 20h extending portion, 21a, 21b, 21c, 21d, 21e, 21f, 21g, 21h end, 30 optical waveguide, 32a, 32b, 32c, 32d input optical waveguide, 34a, 34b, 34c, 34d output optical waveguide, 40 optical pulse, 42 photon pulse, 50, 50a beam splitter, 52a, 52b, 52c, 52d photodetector, 60a, 60b, 60c, 60d common optical waveguide, 62a, 62b, 62c, 62d adjusting element, 63a, 63b, 63c, 63d adjusting element, 64 control unit, 66, 66a intermediate optical waveguide, 70, 70a, 70b optical source, 72 optical fiber, 74 optical connector, 80 substrate, 82 film, 84 film, 100, 200, 300, 400, 500, 600 quantum device

## Claims

1. A quantum device comprising:
a plurality of quantum bit elements each including a diamond crystal layer and a color center, the diamond crystal layer having a central portion and extending portions connected to the central portion and extending in 2n directions (n is an integer of 2 or more) from the central portion, the color center being formed in the central portion;
an input optical waveguide connected to each of n ends of the extending portions and configured to transmit light introduced into the color center;
an output optical waveguide connected to each of n ends of the extending portions and configured to transmit a photon emitted from the color center; and
a branching element connected to the output optical waveguide of a first quantum bit element of the plurality of quantum bit elements and the output optical waveguide of a second quantum bit element of the plurality of quantum bit elements.

2. The quantum device according to claim 1, wherein
the n is 2,
the branching element is connected to the output optical waveguide connected to one of the plurality of quantum bit elements adjacent to each other in a first direction among the plurality of quantum bit elements and the output optical waveguide connected to another of the plurality of quantum bit elements, and branches a first photon emitted from the one of the plurality of quantum bit elements and a second photon emitted from the another of the plurality of quantum bit elements, and
the quantum device further comprises a first photodetector and a second photodetector configured to detect the first photon or the second photon branched by the branching element.

3. The quantum device according to claim 2, further comprising:
a common optical waveguide connected to the input optical waveguide of each of two or more quantum bit elements arranged in a second direction among the plurality of quantum bit elements; and
an adjusting element provided between the common optical waveguide and the input optical waveguide and configured to adjust a distribution ratio of the light.

4. The quantum device according to claim 3, wherein
the input optical waveguide, the output optical waveguide, and the common optical waveguide are provided in different layers, and
the quantum device further comprises a film provided between the input optical waveguide and the output optical waveguide, and the common optical waveguide.

5. The quantum device according to claim 3 or 4, wherein
the adjusting element includes an optical switch.

6. The quantum device according to claim 3 or 4, wherein
the adjusting element includes a beam splitter.

7. The quantum device according to claim 1, wherein
the n is 4,
the branching element includes a first branching element and a second branching element,
the first branching element is connected to the output optical waveguide connected to one of the plurality of quantum bit elements adjacent to each other in a first direction among the plurality of quantum bit elements and the output optical waveguide connected to another of the plurality of quantum bit elements, and branches a first photon emitted from the one of the plurality of quantum bit elements and a second photon emitted from the another of the plurality of quantum bit elements,
the second branching element is connected to the output optical waveguide connected to one of the plurality of quantum bit elements adjacent to each other in the second direction among the plurality of quantum bit elements and the output optical waveguide connected to another of the plurality of quantum bit elements, and branches a third photon emitted from the one of the plurality of quantum bit elements and a fourth photon emitted from the another of the plurality of quantum bit elements; and
the quantum device further comprises:
a first photodetector and a second photodetector configured to detect the first photon or the second photon branched by the first branching element; and
a third photodetector and a fourth photodetector configured to detect the third photon or the fourth photon branched by the second branching element.

8. The quantum device according to claim 7, further comprising:
a first common optical waveguide connected to the input optical waveguide of each of two or more quantum bit elements arranged in the first direction among the plurality of quantum bit elements;
a first adjusting element provided between the first common optical waveguide and the input optical waveguide and configured to adjust a distribution ratio of the light;
a second common optical waveguide connected to the input optical waveguide of each of two or more quantum bit elements arranged in the second direction among the plurality of quantum bit elements; and
a second adjusting element provided between the second common optical waveguide and the input optical waveguide and configured to adjust a distribution ratio of the light.

9. The quantum device according to claim 8, wherein
the first common optical waveguide, the second common optical waveguide, the input optical waveguide, and the output optical waveguide are provided in different layers in this order, and
the quantum device further comprises:
a first film provided between the first common optical waveguide and the second common optical waveguide; and
a second film provided between the second common optical waveguide, and the input optical waveguide and the output optical waveguide.

10. The quantum device according to claim 9, further comprising
an intermediate optical waveguide provided in the second film in contact with the first common optical waveguide and the input optical waveguide, and configured to transmit the light from the first common optical waveguide to the input optical waveguide.

11. The quantum device according to claim 9, further comprising
an intermediate optical waveguide provided in the second film, the intermediate optical waveguide being separated from the first common optical waveguide and the input optical waveguide and being parallel to the first common optical waveguide and the input optical waveguide, the intermediate optical waveguide being configured to transmit the light from the first common optical waveguide to the input optical waveguide.

12. The quantum device according to claim 8, wherein
the first adjusting element and the second adjusting element include optical switches.

13. The quantum device according to claim 8, wherein
the first adjusting element and the second adjusting element include beam splitters.

14. A method of controlling a quantum device, wherein the quantum device comprises:
a plurality of quantum bit elements each including a diamond crystal layer and a color center, the diamond crystal layer having a central portion and extending portions connected to the central portion and extending in 2n directions (n is an integer of 2 or more) from the central portion, the color center being formed in the central portion;
an input optical waveguide connected to each of n ends of the extending portions and configured to transmit light introduced into the color center;
an output optical waveguide connected to each of n ends of the extending portions and configured to transmit a photon emitted from the color center; and
a branching element connected to the output optical waveguide of a first quantum bit element of the plurality of quantum bit elements and the output optical waveguide of a second quantum bit element of the plurality of quantum bit elements;
the method of controlling a quantum device, comprising:
introducing light into the first quantum bit element and the second quantum bit element; and
causing a first photon emitted from the first quantum bit element and a second photon emitted from the second quantum bit element to form quantum entanglement in the branching element.
